# EUROPEAN PATENT APPLICATION

(11) **EP 1 632 411 A1**
(43) Date of publication of application: **08.03.2006**
(21) Application number: 04728260.3
(22) Date of filing: 19.04.2004
(51) Int. Cl.: B60R 25/02

(54) **STEERING LOCK DEVICE**

(30) Priority: 22.04.2003 JP 2003116894; 22.05.2003 JP 2003145024
(71) Applicant: NSK LTD., Shinagawa-ku, Tokyo 141-8560 (JP); NSK Steering Systems Co. Ltd, Shinagawa-ku, Tokyo 141-8560 (JP)
(72) Inventor: HIBINO, Tadashi, NSK STEERING SYSTEMS CO., LTD., Maebashi-Shi, Gunma 3710853 (JP); NEGISHI, Takeshi, NSK STEERING SYSTEMS CO., LTD., Maebashi-Shi, Gunma 3710853 (JP); KURITA, Kenji, c/o NSK STEERING SYSTEMS CO., LTD., Maebashi-Shi, Gunma 3710853 (JP); KOJIMA, Hideki, NSK STEERING SYSTEMS CO., LTD., Maebashi-Shi, Gunma 3710853 (JP)
(74) Representative: Hooiveld, Arjen Jan Winfried
(86) International application number: PCT/JP2004/005533
(87) International publication number: WO 2004/094205

(57) **Abstract**

In a steering locking device comprising a locking device for automatically locking a steering shaft when a key of an ignition switch is withdrawn in a state in which the key is withdrawable, a key mechanism section and the locking device of the ignition switch are provided separately, and the locking device is provided at any portion on an output shaft of a steering wheel extending from the steering wheel to a steering gear section. Accordingly, a large space around knees can be secured while securing a sufficient collapse stroke, and a good steerability is maintained by preventing resonance of the steering wheel caused by lowering of a natural frequency vibration of a steering column while reducing the weight of the device.

## Description

### Technical Field

The present invention relates to a steering locking device for protecting a vehicle from theft and, more specifically, in a manual (normal) steering or a column-type or pinion-type electric power steering apparatus, to the one which brings a steering wheel into an unrotatable state when an ignition switch key is brought into a withdrawable state.

### Background Art

For protecting a vehicle from theft, a steering locking device which not only stops an engine, but also brings a steering wheel into an unrotatable state if a key of an ignition switch is withdrawn is generally used.

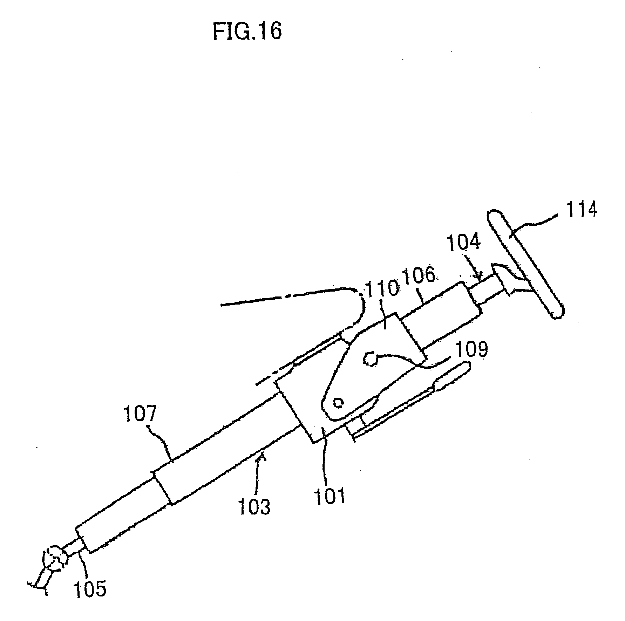

As a steering locking device of this type, for example, as shown in Japanese Utility Model Registration No. 2,501,752 B2, a locking device for protecting the vehicle from the theft normally is provided on a steering column, and has an integral structure with a key mechanism section of an ignition switch. In FIG. 16, the steering locking device is provided on a steering column 103 or the like mounted to a vehicle body such as a lower surface of a dash board via a supporting bracket 101.

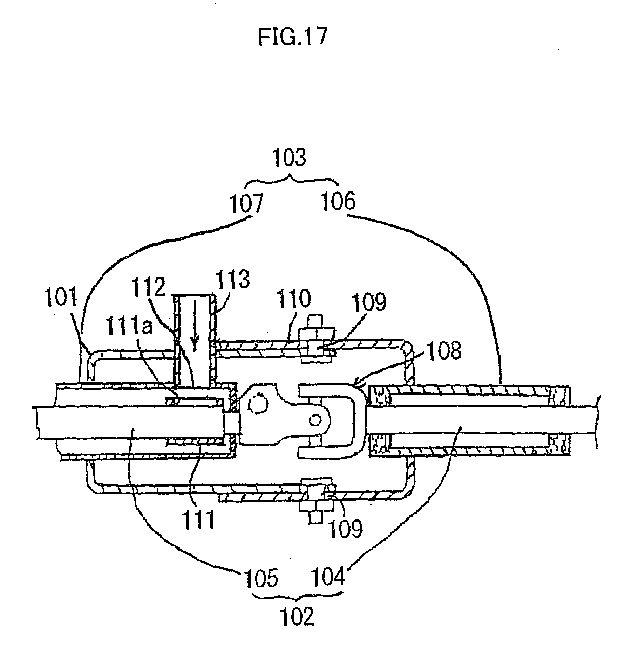

In this example, as shown in FIG. 17, a steering shaft 102 is divided into an upper shaft 104 and a lower shaft 105, the steering column 103 is divided into an upper column 106 and a lower column 107, and the respective upper members (upper shaft, upper column) and lower members (lower shaft, lower column) are connected by universal joints 108, 109. Among others, the lower column 107 is fixed to the vehicle body via the supporting bracket 101, and the upper column 106 is fixed to a pivotal bracket 110 supported by the supporting bracket 101 so as to be capable of pivotal movement about pivots of the universal joint 109.

Then, the steering locking device is provided near the universal joint 108 and is adapted to lock the steering shaft 102 by engagement with a lock key, not shown. In other words, a key lock collar 111 is provided at a distal side (right side in FIG. 17) of the lower shaft 105, and an opening 112 is formed on a distal side (right side in FIG. 17) of the lower column 107, and a guide cylinder 113 for guiding the lock key into the lower column 107 via the opening 112 is provided. The key lock collar 111 is formed with a key lock hole 111a at a position corresponding to the opening 112, so that the lock key is inserted from the opening 112 into the key lock hole 111a by being guided by the guide cylinder 113 to lock the steering shaft 102.

Accordingly, the steering locking device is adapted to lock a steering wheel 114 by sliding the lock key from the outside toward the lower shaft 105 in the direction indicated by an arrow in FIG. 17 and inserting a distal end of the lock key into the key lock hole 111a through the opening 112 of the guide cylinder 113 in a state in which the lock key is aligned with the opening 112 based on the key operation of the ignition switch.

However, in recent years, there is a tendency to shorten the entire length of the steering column 103, and hence there arises a problem such that the position to mount the anti-theft locking device on the steering column 103 is limited. In particular, in the case of the column-type electric power steering apparatus, a motor speed reduction unit or a torque sensor for a motor are mounted to the steering column 103, and hence there arises a problem such that the mounting position of the steering locking device is limited due to a limited space.

Also, the steering column 103 has a function to alleviate an impact exerted in case of collision by securing a predetermined extent of collapse stroke together with the steering shaft 102 to cause collapse. Therefore, when the steering locking device is mounted to the steering column 103, it becomes difficult to secure a sufficient collapse stroke correspondingly. Furthermore, when the steering locking device is mounted near the steering wheel 114, there arises a problem such that a space around knees is reduced.

Furthermore, when the steering locking device is mounted on the steering column 103, the mass of the steering locking device is increased, and when a hole or the like for mounting a lock member is formed on the steering column 103, the natural frequency of the entire column system is reduced. Therefore, for example, in the case of high-velocity traveling, vibrations generated on the side of a tire may coincide with a resonance point of the column system, and hence there arises a problem such that the steering wheel resonates, which gives a disagreeable feeling to a driver, and hence the product value is reduced.

However, for example, when the steering locking device is mounted to a gear section which is disposed in the speed reduction mechanism of the electric power steering apparatus, there is a risk of entrance of dust or water content into the gear section. Therefore, it may cause abrasion or moisture absorption of resin gears at the gear section, which may result in deterioration of performance of the electric power steering apparatus.

Accordingly, it is an object of the present invention to improve interior comfort or safety by securing sufficient collapse stroke and securing a large space around passenger's knees by providing the steering locking device at any portion on an output shaft of the steering wheel extending from the steering wheel to a steering gear section, and to maintain a preferable steerability by reducing the weight of the device and preventing resonance of the steering wheel caused by deterioration of the specific frequency of the steering column. It is another object of the present invention to improve the anti-theft function by forming the steering locking device and a gear box integrally or by providing the steering locking device on the side of the output shaft of the speed reduction unit of the electric power steering apparatus.

### Disclosure of the Invention

According to the present invention, in a steering locking device including a locking device for automatically locking a steering shaft when a key of an ignition switch is withdrawn in a state in which the key is withdrawable, a key mechanism section and the locking device of the ignition switch are provided separately, and the locking device is provided at any portion on an output shaft of a steering wheel extending from said steering wheel to a steering gear section.

Alternatively, said locking device is provided at the steering gear section having a rack & pinion mechanism.

Also, in the present invention, said locking device is provided about a pinion shaft of said steering gear section.

Also, in the present invention, said locking device is provided on the side of the output shaft of a speed reduction unit of an electric power steering apparatus.

Also, in the present invention, said locking device is provided on the output shaft of the speed reduction unit.

Also, in the present invention, said locking device is provided on a yoke connected to the output shaft of the speed reduction unit.

### Brief Description of the Drawings

In the accompanying drawings:
FIG. 1 is a drawing showing a schematic structure of a steering system;
FIG. 2 is a drawing showing an example in which a steering locking device according to a first embodiment of the present invention is mounted to a steering gear section;
FIG. 3 is a drawing viewed from a direction A - A in FIG. 2;
FIG. 4 is a drawing viewed from a direction B - B in FIG. 3;
FIG. 5 is a drawing of a second embodiment of the present invention, showing an example in which the steering locking device is provided downwardly of a rack shaft;
FIG. 6 is a schematic block diagram showing the steering locking device according to a third embodiment of the present invention is built in an electric power steering apparatus;
FIG. 7 is a drawing showing a mounting state of the steering locking device when the apparatus in FIG. 6 is viewed from a proximal side (left side in FIG. 6);
FIG. 8 is a drawing showing a non-engaged state of the steering locking device in FIG. 7;
FIG. 9 is a drawing showing an engaged state of the steering locking device in FIG. 7;
FIG. 10 is a drawing showing a non-engaged state of the steering locking device according to a fourth embodiment of the present invention;
FIG. 11 is a drawing showing an engaged state of the steering locking device shown in FIG. 10;
FIG. 12 is a schematic drawing when the steering locking device according to a fifth embodiment of the present invention is viewed from a proximal side;
FIG. 13 is a schematic drawing showing an engaged state of the steering locking device in FIG. 12;
FIG. 14 is an explanatory drawing showing an engaged state between a yoke and a lock pin of the steering locking device in FIG. 12;
FIG. 15 is a schematic diagram showing a state in which a tilt mechanism is built in the electric power steering apparatus according to a sixth embodiment of the present invention;
FIG. 16 is a side view of a tilt-type steering apparatus in which the steering locking device in the related art is built in; and
FIG. 17 is a cross-sectional view showing a mounting state of the steering locking device in the related art to a steering column.

### Reference Numerals

- 1: steering column
- 2: steering wheel
- 3: steering shaft
- 7: steering gear section
- 10: rack & pinion mechanism
- 11: pinion shaft
- 12: rack shaft
- 13: input shaft
- 14: lock pin operating device
- 16: lock pin
- 18: ring member
- 19: key lock collar
- 19a: key lock hole
- 21: lock pin operating device
- 23: lock pin
- 24: harness connector
- 26: key lock collar
- 26a: key lock hole
- 31: steering column
- 32: steering shaft
- 34: housing
- 36: speed reduction unit
- 37: torque sensor
- 39: input shaft
- 40: output shaft
- 41: worm wheel
- 42: worm gear
- 43: motor
- 44: cover
- 47: frame
- 50: locking device
- 52: lock pin
- 54: ring member
- 55: key lock collar
- 55a: engaging hole
- 61: yoke
- 62: frame
- 63: locking device
- 65: lock pin
- 71: steering column
- 73: steering shaft
- 75: speed reduction unit
- 80: locking device

### Best Mode for Carrying Out the Invention

Referring now to the drawings, embodiments of the present invention will be described.

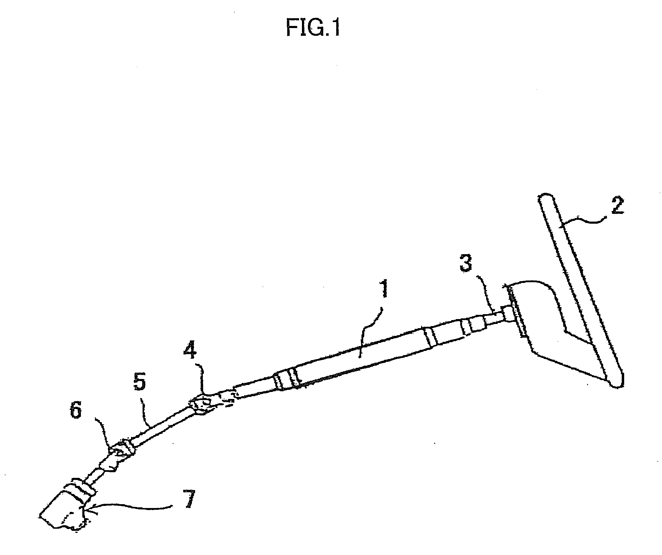

FIG. 1 is a drawing showing a schematic structure of a steering column system. A steering column 1 rotatably supports a steering shaft 3 having a steering wheel 2 at a distal end thereof. The steering shaft 3 is connected to an intermediate shaft 5 via a universal joint 4, and in turn is connected to a steering gear section 7 via a universal joint 6.

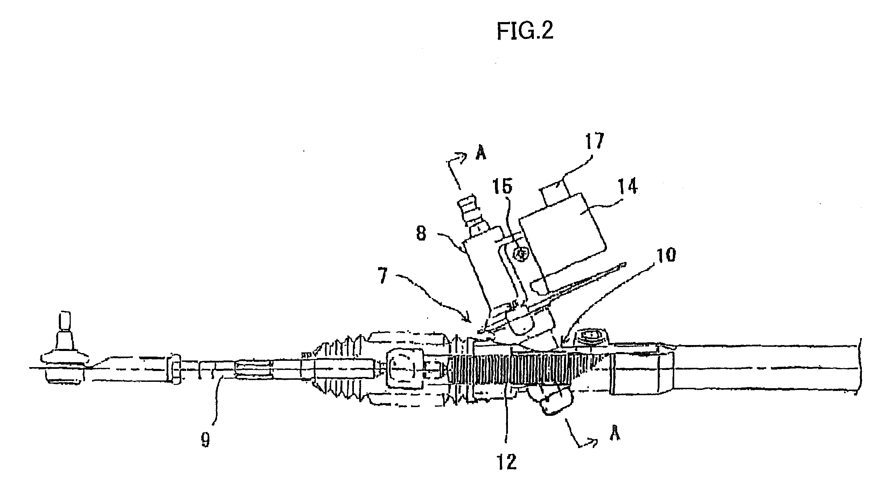

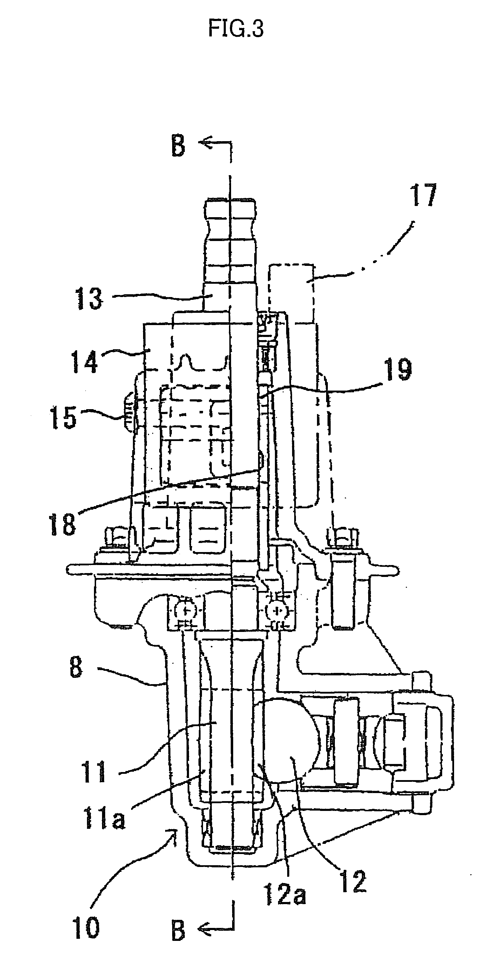

As shown in FIG. 2, a gear box 8 of the steering gear section 7 accommodates a rack & pinion mechanism 10 for converting a rotational movement of the steering shaft 3 into a linear movement to reciprocate a tie rod 9. As shown in FIG. 3, the rack & pinion mechanism 10 includes a pinion teeth 11a of a pinion shaft 11 and a rack shaft 12 having rack teeth 12a which mesh with the pinion teeth 11a. The pinion shaft 11 is integrally connected to an input shaft 13 at an upper end thereof, and the rack shaft 12 is disposed at a midpoint of the tie rod 9 which connects tires on both sides. The pinion shaft 11 and the rack shaft 12 are adapted to convert the rotational movement from the steering shaft 3 to the linear movement of the tie rod 9.

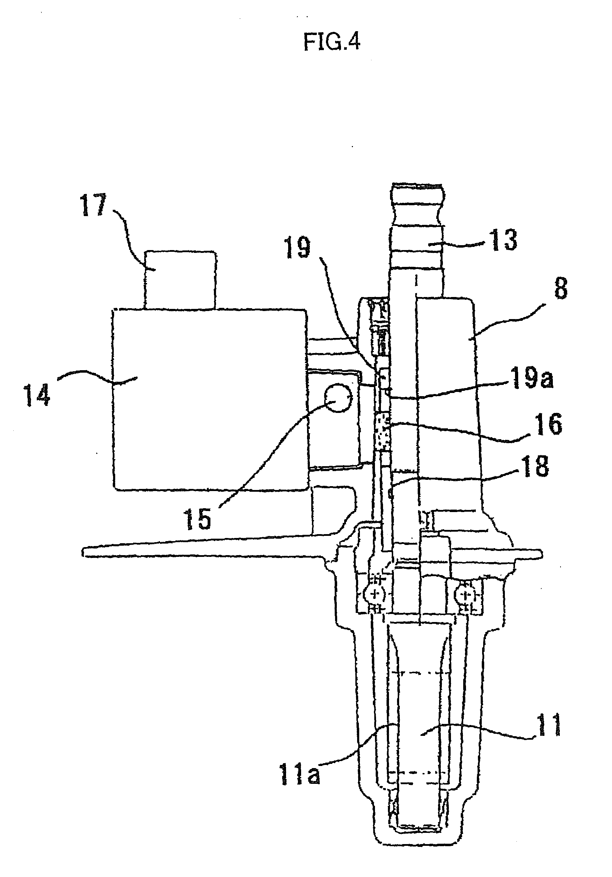

As shown in FIG. 4, a box-shaped lock pin operating device 14 is mounted to the outside of the gear box 8 by a bolt 15. The lock pin operating device 14 is adapted in such a manner that a lock pin 16 is set and stored so as to be capable of projecting and retracting, so that the lock pin 16 is electrically reciprocated based on key information inputted via a harness connector 17.

On the other hand, a key lock collar 19 of substantially cylindrical shape is mounted to an outer periphery of the input shaft 13 in the gear box 8 via a ring member 18 such as a tolerance ring. The key lock collar 19 here is press-fitted and fixed to the input shaft 13 via the tolerance ring 18. A key lock hole 19a is formed at a position near the center of the key lock collar 19, and the key lock collar 19 and the lock pin operating device 14 constitute the steering locking device. Accordingly, when a key of an ignition switch is withdrawn, the lock pin 16 runs into the key lock hole 19a and engages therewith by the lock pin operating device 14, so that the input shaft 13 is brought into an unrotatable state, thereby locking the steering wheel 2.

Since the key lock collar 19 is mounted to the input shaft 13 via the ring member 18, the input shaft 13 does not rotate until a torque value exerted to the steering shaft 3 when being locked reaches a preset torque value, and when it exceeds the preset torque value, the input shaft 13 is slipped by the exceeding torque, whereby the anti-theft of the vehicle is achieved.

Therefore, since the steering locking device is provided in the steering gear section 7, a sufficient stroke is secured for absorbing the impact at the time of collision without making a sacrifice of the collapse stroke of the steering column 1. Also, a projecting portion around the steering column due to the steering locking device may be eliminated, whereby impact against the knees at the time of the secondary collision of a driver can be prevented, and hence safety is improved.

Since the steering locking device is eliminated from the steering column, a steering column section can be reduced in weight corresponding to the weight of the steering locking device, which can bring the same effects as in the case in which the steering column is reinforced. Accordingly, the natural frequency of the steering column system is prevented from lowering, and hence vibrations of the steering wheel caused by resonance of the steering wheel can be avoided, whereby preferable steerability can be maintained.

Furthermore, the steering locking device can be integrally formed with the steering gear section, and hence behaviors such as decomposition or destruction of the steering locking device for the theft becomes very difficult and hence the anti-theft function is further be improved.

In the above-described embodiment, the key lock color 19 is fixed to the pinion shaft 11 via the ring member 18. However, although not shown in the drawings, the key lock collar 19 may be fixed to the pinion shaft 11 by welding or the like, or a groove corresponding to the engaging hole 19a of the key lock collar 19 may be formed on the output shaft 13 instead of the key lock collar 19 in order to reduce the cost, which achieves the same operation and effects.

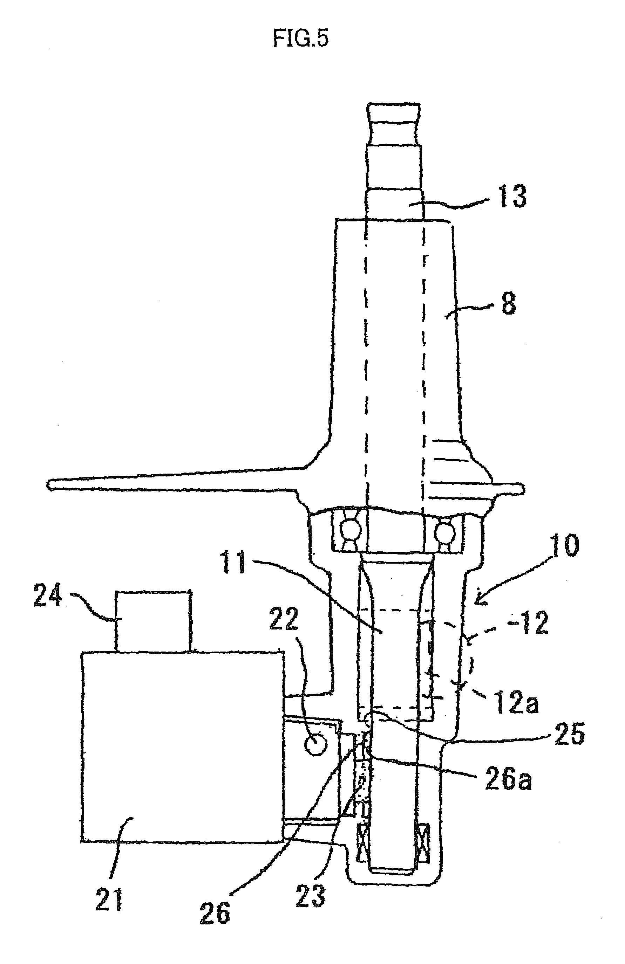

FIG. 5 shows a second embodiment of the steering locking device, in which the same components in the above-described embodiment may be represented by the same reference numerals and description thereof is omitted. While the steering locking device is provided on an upper side (steering wheel side) of the pinion shaft 11 of the rack & pinion mechanism 10 in the above-described embodiment, in this modification, it may be provided on a lower side (opposite side from the steering wheel) of the rack shaft 12, which achieves the same operation and the effects.

In other words, in FIG. 5, a box-shaped lock pin operating device 21 is mounted to the lower side of the rack shaft 12 outside the gear box 8 near a lower end of the pinion shaft 11 by a bolt 22. The lock pin operating device 21 is adapted in such a manner that a lock pin 23 is set and stored so as to be projected and retracted so that the lock pin 23 is electrically reciprocated based on key information supplied via a harness connector 24.

A substantially cylindrical key lock collar 26 is mounted to the outer periphery of the input shaft 13 in the gear box 8 via a ring member 25. Here, a key lock hole 26a is formed on the key lock collar 26 near a center thereof, so that the key lock collar 26 and the lock pin operating device 21 constitute the steering locking device. Accordingly, when the key of the ignition switch is withdrawn, the lock pin 23 runs into the key lock hole 26a and engages therewith by the lock pin operating device 21, whereby the input shaft 13 is brought into the unrotatable state, thereby locking the steering wheel 2. Therefore, in this modification, the same operation and the effects as in the above-described embodiment are achieved.

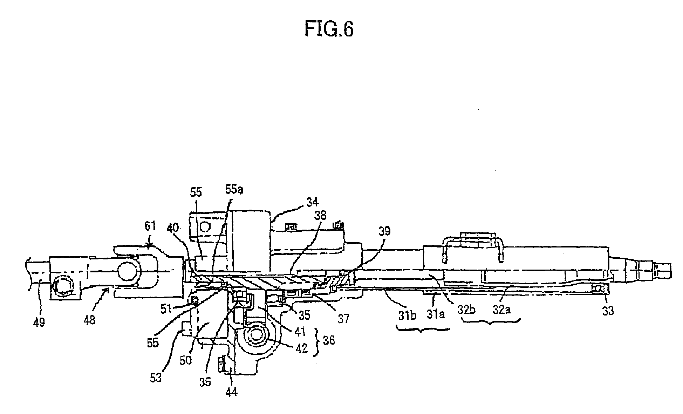

FIG. 6 shows a schematic structure of the steering locking device according to a third embodiment of the present invention. A steering column 31 rotatably supports a steering shaft 32 having a steering wheel at a distal end thereof by a ball bearing 33. The steering column 31 and the steering shaft 32 include an outer column 31a and an inner column 31b, and an outer shaft 32a and an inner shaft 32b, respectively, and are adapted to absorb impact energy by being collapsed by an axial load generated at the time of collision.

A speed reduction unit 36 supported by a pair of ball bearings 35, 35 disposed on an outer periphery of an output shaft 40 and a torque sensor 37 in adjacent to the speed reduction unit 36 are disposed in a housing 34 at a proximal side (left side in FIG. 6) of the steering column 31. The speed reduction unit 36 includes a worm wheel 41 which is mounted to the output shaft 40 out of an input shaft 39 and the output shaft 40 connected with the intermediary of a torsion bar 38, and a worm gear 42 to be meshed with the worm wheel 41, so as to reduce a drive force of a motor 43 and transmit it to the output shaft 40.

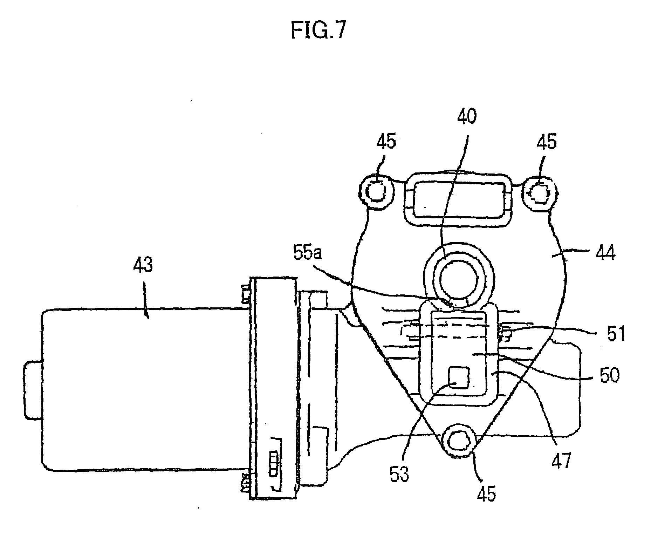

As shown in FIG. 7, a cover 44 for sealing the housing 34 is mounted to an opening side (left side in FIG. 6) of the housing 34 by being tightened by three bolts 45. The cover 44 is formed with a substantially cylindrical key lock collar 55 for allowing the output shaft 40 to be inserted at a center thereof, and with a substantially U-shaped frame 47 so as to project toward the proximal side (left side in FIG. 6) of the steering column 31. An intermediate shaft 49 is connected to an end of the output shaft 40 via a universal joint 48.

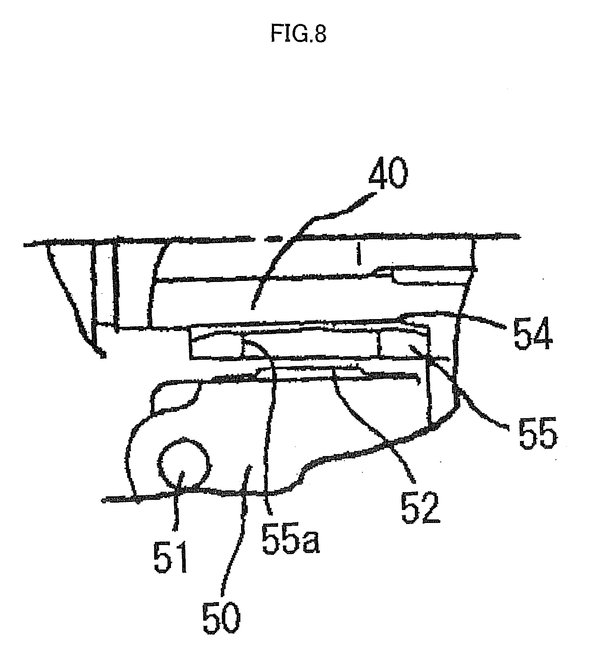

Then, a box-shaped locking device 50 is fitted to the frame 47, and is fixed by a bolt 51. A lock pin 52 is disposed in the locking device 50, so that the lock pin 52 is reciprocated in the vertical direction in FIG. 7 based on the key information supplied via a harness connector 53. On the other hand, as shown in FIG. 8, a key lock collar 55 having an engaging hole 55a at a center thereof is press-fitted and fixed to the outer periphery of the output shaft 40 neat the end thereof via a ring member 54 such as a tolerance ring.

Here, the ring member 54, when mounted to the output shaft 40, constitutes a torque limiter which comes into abutment with an inner periphery of the key lock collar 55, and constrains rotation with its radial resiliency for a torque up to a preset value at the time of engagement of the lock pin 52. Then, when the lock pin 52 engages the key lock collar 55, the rotation of the output shaft 40 is constrained, and even when the torque equal to or larger than the preset value is exerted, it is slipped by the exceeding torque.

Accordingly, the lock pin 52 is projected and retracted according to the key state of the ignition switch, and locking or unlocking are achieved by engagement of the key lock collar 55 with the engaging hole 55a. The projection and retraction of the lock pin 52 may be operated either electrically or mechanically.

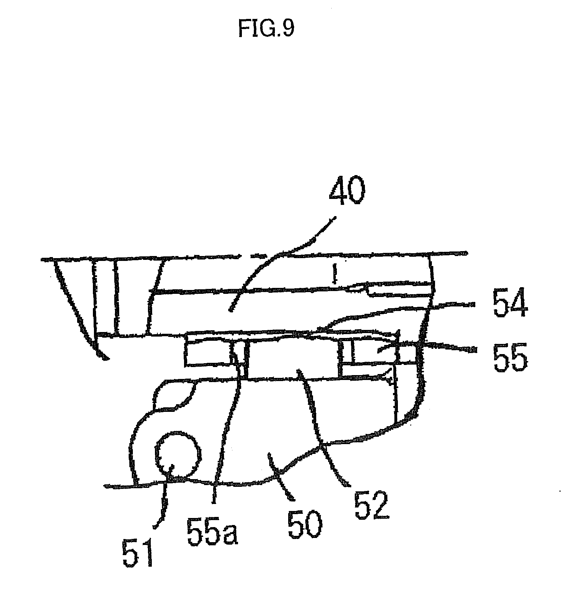

In other words, when the key of the ignition switch is withdrawn, the lock pin 52 projects from the locking device 50, and as shown in FIG. 9, is fitted into the engaging hole 55a of the key lock collar 55, whereby rotation of the output shaft 40 is locked. In this state, even when a large force is exerted on the steering shaft 32 by a stealer or the like, the output shaft 40 does not rotate until the preset torque value (100 Nm legally), and is firmly locked. Then, when a torque equal to or larger than the preset torque value is exerted, the output shaft 40 rotates at a torque by the amount exceeding the preset torque value. Consequently, in the locked state, in other words, in a state in which the lock pin 52 engages the key lock collar 55, the steering wheel cannot be operated freely.

Therefore, according to the third embodiment, since the steering locking device is provided on the side of the output shaft 40 of the speed reduction unit 36, a sufficient stroke can be secured and impact energy generated upon collision can be absorbed without making a sacrifice of the collapse stroke of the steering column 31. Also, the space around the knee can be secured. In addition, since the steering locking device is provided on the side of the output shaft 40 of the speed reduction unit 36, vibrations of the steering wheel caused by resonance of the steering wheel are eliminated without lowering the natural frequency of the column system, whereby good steerability can be maintained.

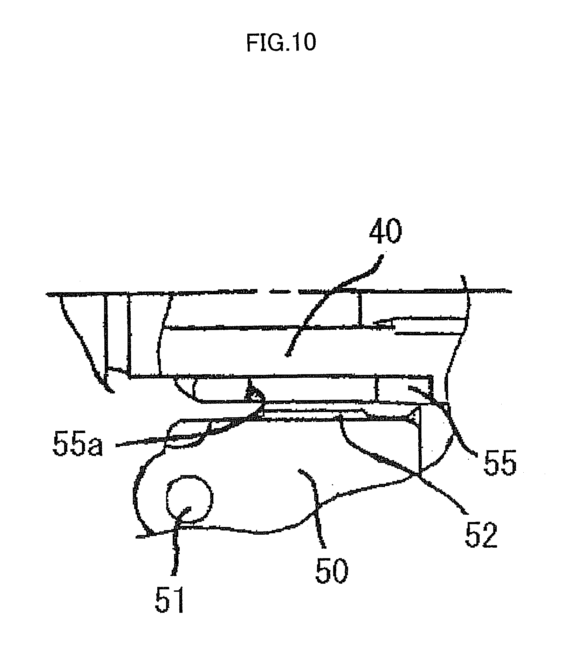

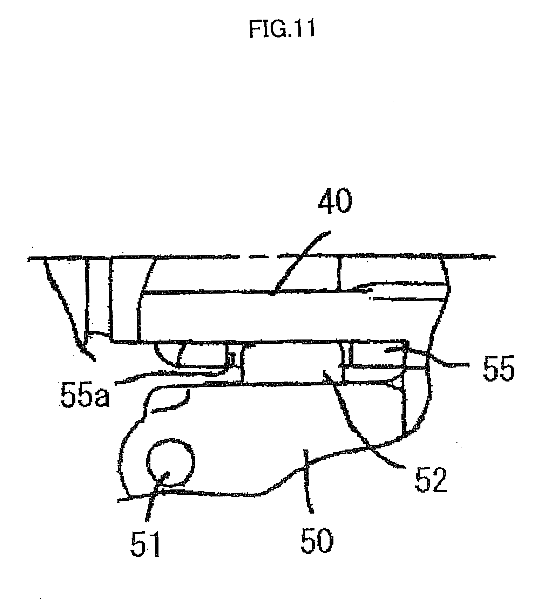

FIG. 10 and FIG. 11 show a fourth embodiment of the present invention. The same members as in the third embodiment are represented by the same reference numerals and description thereof is omitted. While the key lock collar 55 is fitted and fixed to the output shaft 40 via the ring member 54 in the third embodiment, the key lock collar 55 is directly fixed to the output shaft 40 by welding in the fourth embodiment.

Consequently, while the output shaft 40 is slipped by the ring member 54 with an exceeded torque when torque value is equal to or larger than the preset torque value in the third embodiment, in the case of the fourth embodiment, the output shaft 40 is completely brought into an unrotatable state, when the key of the ignition switch is withdrawn, the lock pin 52 engages the engaging hole 55a of the key lock collar 55, and the steering shaft 32 is completely locked. Therefore, in the fourth embodiment as well, the same operation and the effects as in the third embodiment are achieved.

While the engaging hole 55a is provided on the key lock collar 55 in the third and fourth embodiments, it is also possible to provide the engaging hole 55a directly on the output shaft 40, and in this case, not only the same operation and the effects as the previous respective embodiments are achieved, but also the components can be omitted, whereby reduction of the manufacturing cost is realized.

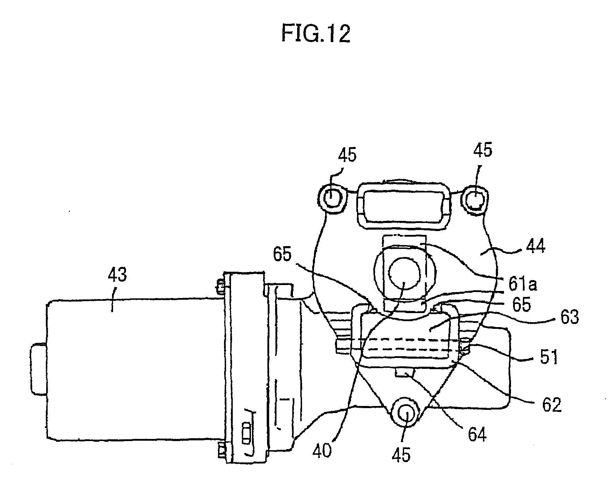

FIG. 12 shows a fifth embodiment of the present invention, in which the same members as in the third and fourth embodiments are represented by the same reference numerals and description thereof is omitted. In the same drawing, a yoke 61 is integrally mounted to the end of the output shaft 40, and the yoke 61 has bifurcated yoke strips 61a, 61a. A substantially U-shaped frame 62 extends downwardly of the yoke 61, and a box-shaped locking device 63 is fitted into the frame 62 and is fixed by the bolt 51. A harness connector 64 for supplying the key state of the ignition switch extends downward on a bottom surface of the locking device 63.

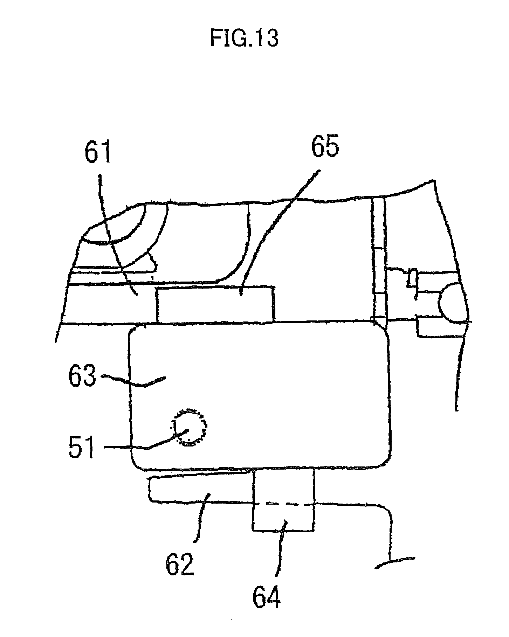

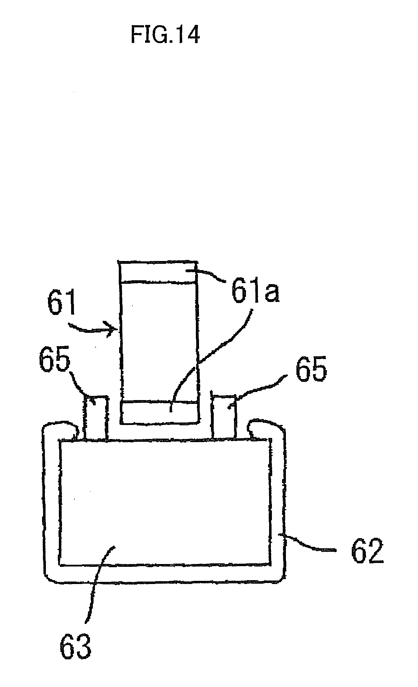

As shown in FIG. 13, the locking device 63 is provided with a pair of lock pins 65, 65 so as to be capable of projecting from and retracting into an upper surface of the device in the vertical direction in the same drawing. As shown in FIG. 14, when the key of the ignition switch is withdrawn, the lock pins 65, 65 project upward in the same drawing, so that the lower yoke strip 61a is clamped. Accordingly, when being locked, the rotation of the yoke 61 is constrained by the pair of lock pins 65, 65, and the output shaft 40 connected to the yoke 61 is brought into an unrotatable state. Accordingly, when the key of the ignition switch is withdrawn, the steering shaft 32 is completely locked.

Therefore, according to the fifth embodiment as well, the same operation and effects as in the third and fourth embodiments are achieved.

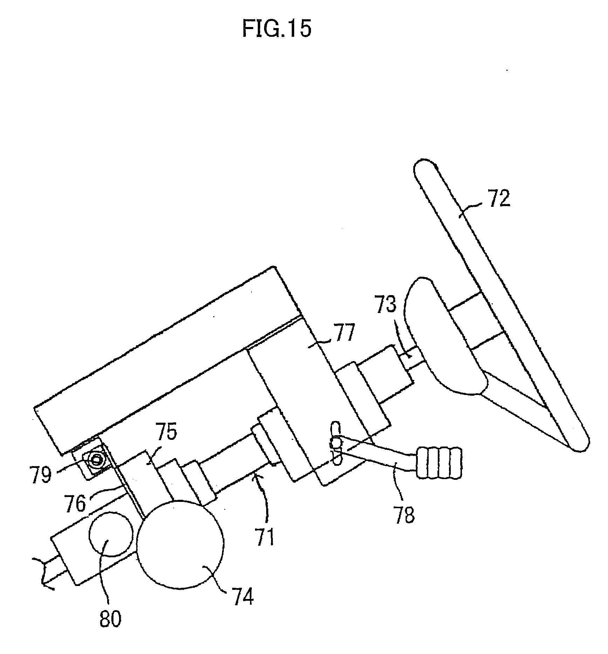

FIG. 15 is a schematic diagram showing a tilt mechanism is built in a steering system according to a sixth embodiment of the present invention. In the same drawing, reference numeral 71 designates a steering column for rotatably supporting a steering shaft 73 of a steering wheel 72, and a speed reduction unit 75 of an electric motor 74 is disposed on a proximal side (left side in FIG. 15) of the steering column 71. A hold bracket 76 and a tilt bracket 77 are disposed near both ends of the steering column 71 respectively, so that a mechanism for tilting the steering shaft 73 about a tilt pivot 79 provided on the hold bracket 76 by the operation of a tilt lever 78 provided on the tilt bracket 77 is configured. Then, a steering locking device 80 is provided on the side of the output shaft of the speed reduction unit 75.

In this case, by providing the steering locking device 80 on the side of the output shaft of the speed reduction unit 75, the adjustment of the weight balance on the steering wheel side and the steering gear side with respect to the tilt mechanism is enabled. Consequently, a balance spring to be mounted for preventing the steering wheel from dropping off when the tilt lever 78 is released is no longer necessary, whereby reduction of the cost is achieved. This brings the same effects as in the case of the tilt mechanism is integrated in a case in which a telescope mechanism is built in the steering system as well.

For example, when the steering locking device is provided on the side of the output shaft of the speed reduction unit of the electric power steering apparatus, since an assist by the electric motor does not work when being locked, a force exerted to the lock pin is the same irrespective of whether the steering locking device is provided on the input side or the output side.

As described above, according to the steering locking device in the present invention, the key mechanism section of the ignition switch and the steering locking device are provided separately, and the locking device is provided at any portion of the output shaft of the steering wheel from the steering wheel to the steering gear section. Accordingly, the sufficient collapse stroke can be secured and the large space around the knees can be secured, whereby impact energy upon collision can be absorbed without making a sacrifice of the collapse stroke of the steering column. Also, a projecting portion around the steering column may be eliminated, whereby impact against the movement of the knees at the time of the secondary collision of the driver can be prevented, and hence the safety is improved. Also, since the locking device is not provided on the steering column on the side of the input shaft of the speed reduction unit of the electric power steering apparatus, the natural frequency of the entire steering column system is not lowered due to the unnecessary hole, and hence vibrations caused by resonance of the steering wheel is reduced even during the high-velocity traveling, thereby maintaining good steerability. Also, since the steering locking device and the key mechanism section of the ignition switch are configured separately, the key mechanism section of the ignition switch can be provided at a desired position, whereby the quality of the vehicle as a commodity is improved from the view point of design. Furthermore, when the steering locking device is provided on the output shaft of the speed reduction unit of the column-type electric power steering apparatus or on the yoke connected to the output shaft, entrance of dust or water content into the speed reduction unit can be prevented, and the performance of the electric power steering apparatus can be improved without generating abrasion or moisture absorption of the resin gears.

In the respective embodiments described above, examples in which the steering locking device according to the present invention are applied to the manual steering apparatus or the electric power steering apparatus. However, it can be applied to a hydraulic power steering apparatus having a hydraulic circuit and a hydraulic cylinder structure added thereto as a matter of course. Although the lock pin is electrically operated in the above-described respective embodiments, it may be operated mechanically.

### Industrial Applicability

The present invention can be applied to the manual steering gear, the electrical power steering gear, the hydraulic power steering gear, and so on.

## Claims

1. A steering locking device comprising a locking device for automatically locking a steering shaft when a key of an ignition switch is withdrawn in a state in which the key is withdrawable,
wherein a key mechanism section and said locking device of said ignition switch are provided separately, and the locking device is provided at any portion on an output shaft of a steering wheel extending from said steering wheel to a steering gear section.

2. A steering locking device according to Claim 1, wherein said locking device is provided at the steering gear section having a rack & pinion mechanism.

3. A steering locking device according to Claim 1, wherein said locking device is provided about a pinion shaft of said steering gear section.

4. A steering locking device according to Claim 1, wherein said locking device is provided on a side of an output shaft of a speed reduction unit of a column-type electric power steering apparatus.

5. A steering locking device according to Claim 4, wherein said locking device is provided on the output shaft of said speed reduction unit.

6. A steering locking device according to Claim 4, wherein said locking device is provided on a yoke connected to the output shaft of said speed reduction unit.
